# DEMANDE DE BREVET EUROPEEN

(11) **EP 0 647 394 A1**
(43) Date de publication de la demande: **12.04.1995**
(21) Numéro de dépôt: 93402508.1
(22) Date de dépôt: 11.10.1993
(51) Int. Cl.: A01K 1/01

(54) **Système composé d'un bac à litière équipé d'un dispositif d'évaporation accélérée des urines**

(71) Demandeur: SETRIC INTERNATIONAL S.A., F-31450 Deyme (FR)
(72) Inventeur: Chelle, René, F-31190 Grepiac (FR)

(57) **Abrégé**

Système composé d'une litière minérale non absorbante et d'un dispositif permettant d'augmenter son efficacité dans le temps par traitement aseptisant et assèchement régulier et automatique de l'eau des urines et des fèces.

L'invention concerne un système permettant d'augmenter la longévité et l'efficacité des litières minérales pour petits animaux domestiques par assèchement rapide et de façon active des grains composant cette litière.

Il est constitué d'un bac (1) rectangulaire présentant un orifice central (cheminée inférieure) (2). Dans ce bac à mi-hauteur est disposé un caillebotis (3) à trame plus ou moins lâche supportant le fond (4) contenant la litière minérale non absorbante traitée (7). Un radiateur électrique (5) de faible puissance (20-40 watts) alimenté en 12 volts est placé sous le callebotis (3) et réchauffe l'air de cette enceinte, créant une convection verticale, l'air chaud s'échappant par les cheminées supérieures (6).
L'urine du chat dissout les produits bactéricides adsorbés et libère lors de son cheminement vertical les parfums fixés. Au contact du fond (4), elle diffuse latéralement de façon très rapide créant une tache de fort diamètre qui est asséchée rapidement par l'air chaud circulant dans cette enceinte.

Au contact de ce fond, l'urine subit aussi un traitement bactéricide et libère un parfum dans le courant d'air de l'enceinte inférieure. Par l'assèchement rapide de la litière ainsi que par l'action bactéricide et parfumante, le dispositif décrit permet la conservation et l'amélioration des performances des litières minérales non absorbantes pour petits animaux domestiques.

## Description

La présence d'animaux de compagnie, crée pour l'homme des contraintes dont le plus grand nombre est lié aux problèmes posés par l'émission quotidienne d'urines et de fèces.

L'intérêt grandissant de l'homme pour de tels animaux a conduit les industriels à proposer différents produits dits de litières, à disposer dans un bac où l'animal prend l'habitude de se rendre pour uriner ou déféquer.

Les premières litières ont été très certainement constituées par de la terre, du sable, ou de la sciure. On s'est très rapidement rendu compte que ces matériaux ne résolvaient pas l'essentiel des problèmes posés pour lesquels la solution était de faire disparaître le liquide (urine) et les mauvaises odeurs résultant de l'action des microorganismes sur les matières organiques (surtout urée) présentes dans l'urine. Les premiers matériaux utilisés ne répondaient pas à cette attente. De plus, on leur reproche d'être trop lourds (sable - terre) et d'être salissants (sable - terre - sciure) par le fait qu'ils adhèrent facilement à la plante des pieds et aux doigts des chats qui les entraînent hors du bac.

Les supports plus modernes utilisés encore de nos jours sont des substances minérales absorbantes de la famille des argiles qui ont pour propriétés essentielles d'avoir une capacité de rétention d'eau élevée (jusqu'à 110% de leur masse). Ces matériaux ne sont que partiellement satisfaisants car ils fixent les éléments liquides de l'urine mais ne neutralisent pas l'action bactérienne et les dégagements d'odeur. Leur durée de vie sera étroitement liée à la quantité d'urine répandue et aux nuisances olfactives qu'elle engendre.

L'attention s'est par la suite portée sur des matériaux à ajouter aux litières pour masquer les mauvaises odeurs par des parfums ou pour inhiber le développement des bactéries responsables de ces odeurs.

Les tentatives pour parfumer les litières faites d'argiles absorbantes se sont révélées onéreuses car il est nécessaire d'introduire de grandes quantités de parfums pour qu'une partie suffisante de ces parfums parvienne à se dégager d'une matière absorbante utilisée par définition pour retenir et non pour dégager.

Nous pouvons résumer ce qui vient d'être dit jusqu'ici, en avançant que toutes les litières commercialisées fonctionnent sur le même principe : celui de l'absorption de l'eau des urines par des matériaux particulièrement aptes à absorber, mais inaptes à résoudre convenablement le problème des odeurs.

Mais l'élimination de l'eau des urines peut se faire par un mécanisme différent de l'absorption, en particulier par des mécanismes d'évaporation naturelle rapide.
Nous avons proposé dans un précédent brevet d'utiliser, pour la confection de litière pour chats et petits animaux, l'association :
· d'un matériau caverneux, de grande surface spécifique et non absorbant, de faible densité et de granulation adéquate, qui permet une forte évaporation naturelle,
· d'un parfum qui masque l'inévitable dégagement des odeurs "sui generis" de l'urine perçues dès l'émission de celle-ci,
· et d'un bactéricide qui inhibe les interventions bactériennes et empêche, de ce fait, la formation de molécules malodorantes (comme l'ammoniac) qui suivent, quand elles sont produites, le cheminement de l'eau qui s'évapore.

Les matériaux caverneux présentent des cavités qui ne possèdent qu'une seule ouverture et dont les diamètres sont nettement plus grands que ceux des argiles. Pour ces deux raisons, leur capacité à absorber est faible, mais leur surface spécifique est grande. Ce sont des matériaux qui offrent une grande surface extérieure de répartition du liquide, donc une grande surface de contact avec l'air et qui permettent, de ce fait, une évaporation rapide car celle-ci n'est pas ralentie par les forces de rétention de l'eau adsorbée. La présence de cavernes confère à de tels matériaux, une faible densité.

Au matériau décrit ci-dessus est associé un parfum et un bactéricide. Il est évident que l'évaporation accélérée de l'eau est accompagnée du départ des molécules volatiles malodorantes. Ces molécules sont pondéralement peu importantes : elles confèrent cependant à l'urine, son odeur "sui generis". Il suffit d'associer, comme nous le proposons, au matériau, un parfum pour masquer ces odeurs initiales qui, de fait, ne seront pas gênantes.

Les mauvaises odeurs les plus gênantes sont celles qui se forment à partir de l'urée de l'urine sous l'action des bactéries. Le bactéricide aura pour rôle d'empêcher l'action des bactéries.

Notre invention s'articule de manière cohérente avec les brevets n° 88 05050 et n° 88 06246 dont elle renforce l'efficacité. Elle consiste en l'usage d'un évaporateur dont le rôle sera d'assécher rapidement la litière par évaporation.

Notre invention précise les brevets n° 88 05050 et n° 88 06246 en décrivant les différents procédés utilisables pour introduire le bactéricide et le parfum et les libérer au moment le plus propice.

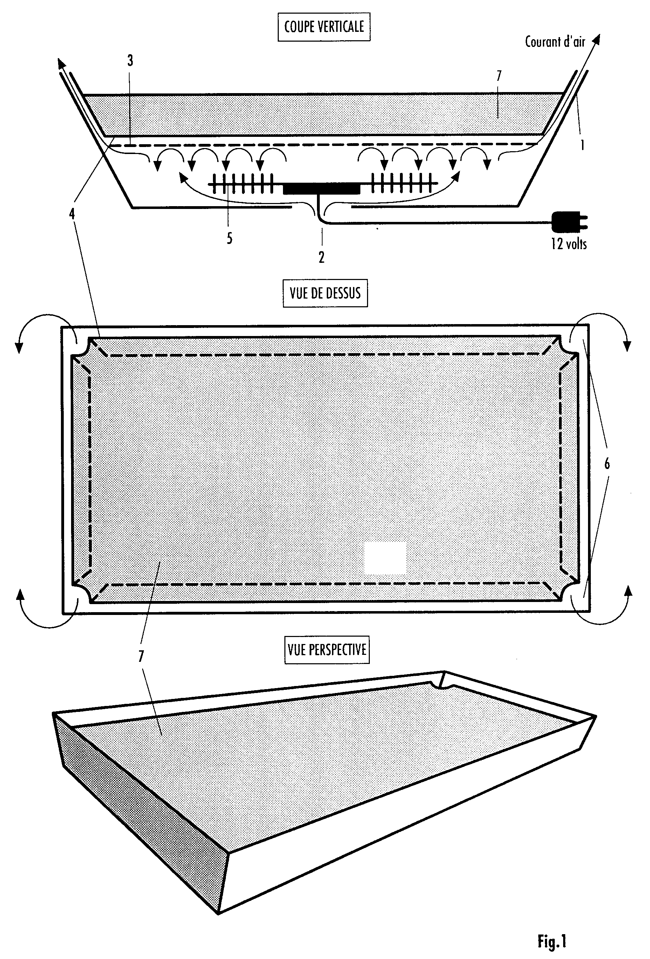

Le principe de l'évaporateur, objet de l'invention, est représenté en coupe sur la figure 1. Il comporte un premier contenant du bac de litière composée de :
- une litière constituée de grains solides n'absorbant pas l'urine de façon à ce que cette dernière traverse rapidement la couche litière (7) pour s'étendre sur le revêtement du fond (4).
- un fond de litière (4) constitué d'une feuille de matériau absorbant tel que du papier "buvard" ou papier "filtre".

Une deuxième partie du bac litière ménage un volume libre entre le fond de litière et cette deuxième partie.On peut faire circuler de l'air dans ce volume grâce à un orifice central (2) et des orifices latéraux, cheminées supérieures (6).

Un élément de chauffe (5) est placé dans la circulation de l'air qu'il réchauffe et dynamise.
Le fonctionnement de l'évaporation est le suivant :
L'urine déposée par le chat passe au travers de la litière en laissant un minimum de traces et arrive sur la feuille absorbante où elle s'étale rapidement.
L'objet du système va être d'assécher rapidement le fond de la litière en faisant circuler de l'air chaud sur la surface inférieure. La présence d'une surface chauffée va d'une part actionner la circulation de l'air par convection, d'autre part, élever la température de l'air, ce qui renforcera le mécanisme d'évaporation au niveau du fond de litière. L'expérience montre qu'avec simplement quelques watts dissipés par effet joule sur une résistance, un volume d'urine de 40cm3 peut être asséché en 120 minutes.

Le système ainsi décrit permet une grande latitude de choix pour l'insertion du parfum et du bactéricide qui auront mission de combattre les odeurs "sui generis" et les odeurs de décomposition.

Pour le parfum, il peut être introduit dans la litière par adsorption sur certains grains spécifiquement placés pour cela. La méthode la plus efficace nous paraît pouvoir être d'utiliser du parfum microencapsulé dans un revêtement soluble dans l'eau et dans l'urine. Les microcapsules pourront être introduites dans la litière ou sur le papier "buvard" ou papier "filtre".

Pour le bactéricide, il sera préférentiellement introduit dans la litière.

Le système complet pourra être commercialisé sous la forme :
- d'un évaporateur dont l'encombrement sera semblable aux bacs de litière actuels. L'apport thermique se fera par l'énergie électrique et il sera possible de n'utiliser que la convection naturelle.
- d'un "sable litière" peu absorbant ou pas absorbant du tout de manière à ce que l'urine atteigne le plus rapidement possible le fond par effet de gravité. Ce fond pourra contenir des grains parfumés ou des microcapsules de parfum.
- d'un jeu de papier "buvard" ou papier "filtre" constituant le fond du récipient-litière traité éventuellement au bactéricide et comportant des microcapsules de parfum. On comprend que l'invention puisse revendiquer tous les supports possibles dès lors qu'ils vérifient les capacités nécessaires en terme d'absorption et de support des parfums et de bactéricides. De même, la nature du parfum et des bactéricides peuvent être aussi divers que le permet la connaissance.

## Revendications

1. Système composé d'un bac et de sa litière pour chat caractérisé en ce qu'il comporte un dispositif d'évaporation actif de l'urine, associé à des produits de traitement contre la formation d'ammoniac et des parfums masquant l'odeur propre de l'urine et des fèces.

2. Système selon la Revendication 1 caractérisé en ce que le matériau constitutif de la litière n'est pas absorbant et permet au liquide d'atteindre sans rétention le fond du bac.

3. Système selon les Revendications 1 et 2 caractérisé en ce que le liquide est absorbé au fond du bac par un tapis fonctionnant en "buvard" et ayant pour effet d'étaler ce liquide sous forme de tache.

4. Système selon les Revendications 1, 2 et 3 caractérisé en ce que le liquide après étalement est séché rapidement par un courant d'air circulant dans un espace pratiqué entre le tapis et le fond du bac.

5. Système selon les Revendications 1, 2, 3 et 4 caractérisé en ce que l'air peut être chauffé par un radiateur électrique.

6. Système selon les Revendications 1, 2, 3, 4 et 5 caractérisé en ce que la litière et le tapis sont traités par un bactéricide et un parfum.

7. Système selon les Revendications 1, 2, 3, 4, 5 et 6 caractérisé en ce que le bactéricide et le parfum peuvent être soit adsorbés sur la litière ou le tapis soit présents sous forme de microcapsules qui se dissolvent au contact de l'urine.

8. Système selon les Revendications 1, 2, 3, 4, 5, 6 et 7 caractérisé en ce que la litière peut être du sable de granulométrie appropriée ou tout autre matériau non poussièreux et non absorbant.
